(19) **Europäisches Patentamt European Patent Office Office européen des brevets**

(11) **EP 4 686 907 A1**

(12) **EUROPÄISCHE PATENTANMELDUNG**

(43) Veröffentlichungstag:
04.02.2026   Patentblatt 2026/06

(21) Anmeldenummer: 24192313.5

(22) Anmeldetag: **01.08.2024**

(51) Internationale Patentklassifikation (IPC):
*G01B 9/02001* (2022.01)   *G01B 9/02004* (2022.01)
*G01B 9/02055* (2022.01)   *G01B 9/02056* (2022.01)
*G01B 9/0209* (2022.01)   *G01S 17/34* (2020.01)
*G01S 17/36* (2006.01)

(52) Gemeinsame Patentklassifikation (CPC):
**G01B 9/02004; G01B 9/02007; G01B 9/02057;
G01B 9/02065; G01B 9/0209; G01S 17/32;
G01S 17/34; G01S 17/36;** G01B 2290/45

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Universität Kassel
34125 Kassel (DE)**

(72) Erfinder:
• **LEHMANN, Peter
37085 Göttingen (DE)**
• **HAGEMEIER, Sebastian
34121 Kassel (DE)**

(74) Vertreter: **Kleine, Hubertus et al
Loesenbeck - Specht - Dantz
Patent- und Rechtsanwälte
Am Zwinger 2
33602 Bielefeld (DE)**

(54) **VERFAHREN UND ANORDNUNG ZUR INTERFEROMETRISCHEN ABSTANDSBESTIMMUNG MITTELS EINER FASEROPTISCHEN SONDE**

(57)     Die Erfindung betrifft ein Verfahren zur interferometrischen Abstandsbestimmung mittels einer faseroptischen Sonde (10), wobei von einem Lichtaustritt (111) der Sonde (10) auf ein Messobjekt (1) gesendetes Licht mindestens einer in die faseroptische Sonde einspeisenden Halbleiterlichtquelle (23) mit von dem Messobjekt (1) reflektiertem Licht zu einer Interferenz gebracht wird, ein Interferenzsignal gemessen wird und eine Phasenlage des gemessenen Interferenzsignals in Bezug auf ein Referenzsignal ($U_{ref}$), das eine Schwingungslage der mikrooptischen Sonde (10) wiedergibt, zur Abstandsbestimmung verwendet wird. Das Verfahren zeichnet sich dadurch aus, dass die Halbleiterlichtquelle (23) mit einem periodisch variierenden Strom betrieben wird, wodurch eine Wellenlänge des von der Halbleiterlichtquelle (23) ausgesendeten Lichts ebenfalls periodisch variiert, wobei eine Phasenlage des gemessenen Interferenzsignals in Bezug auf den periodisch variierenden Strom zur Abstandsbestimmung verwendet wird. Die Erfindung betrifft weiterhin eine zur Durchführung des Verfahrens eingerichtete Anordnung zur interferometrischen Abstandsbestimmung.

Fig. 1

EP 4 686 907 A1

## Beschreibung

Die Erfindung betrifft ein Verfahren und eine Anordnung zur interferometrischen Abstandsbestimmung mittels einer faseroptischen Sonde, bei denen Licht mindestens einer Halbleiterlichtquelle in die faseroptische Sonde eingespeist wird. Ein von einem Lichtaustritt der Sonde auf ein Messobjekt gesendeter und von dem Messobjekt reflektierter Teil des Lichts wird mit einem Teil des Lichts, der von einer Referenzfläche reflektiert wird, zu einer Interferenz gebracht, wobei ein Interferenzsignal gemessen wird und das Interferenzsignal zur Abstandsbestimmung ausgewertet wird.

Derartige faseroptische Sonden zur Abstandsbestimmung können zur Bestimmung einer Oberflächentopologie einer Oberfläche eingesetzt werden, indem sie in einer oder zwei Dimensionen über die Oberfläche geführt werden. So kann beispielsweise die Oberfläche von Bauelementen bereits während der Produktion vermessen werden und die Maßhaltigkeit der Bauelemente kann überprüft werden. Mit faseroptischen Sonden lassen sich Auflösungen der Abstandsmessung im Bereich von Submikrometern erzielen, bei gleichzeitig guter lateraler Auflösung und schneller Durchführbarkeit der Messung. Insbesondere Abstandsmessungen, die unter beengten Platzverhältnissen durchgeführt werden müssen, beispielsweise innerhalb von Produktionsanlagen für die genannten Bauteile, profitieren von faseroptischen Messungen, da ein faseroptischer Sondenkopf platzsparend ausgeführt werden kann und über die Faser flexibel mit weiteren Komponenten, die zur Auswertung eingesetzt werden, verbunden werden kann.

Ein Verfahren mit einer Anordnung zur faseroptischen Abstandsmessung ist beispielsweise aus der Druckschrift DE 10 2011 001 161 A1 bekannt. Bei dem dort beschriebenen Verfahren und der Vorrichtung wird eine in Messrichtung schwingende faseroptische Sonde eingesetzt. Die Schwingung kann beispielsweise mithilfe eines Piezo-Biegearms erzeugt werden. Im Betrieb interferiert Licht, das von einem Lichtaustritt der Sonde auf ein Messobjekt gesendet wird, von diesem Messobjekt reflektiert wird und wieder in die Sonde eingekoppelt wird, mit Licht, das beispielsweise am Lichtaustritt der Sonde selbst (oder einer sonstigen Referenzfläche) reflektiert wird.

Durch die Bewegung der Sonde wird die optische Weglänge des vom Messobjekt reflektierten Lichts gegenüber der optischen Weglänge des am Lichtaustritt selbst reflektierten Lichts moduliert. Aus der Phasenlage des gemessenen Interferenzsignals relativ zu einem Signal, das die Bewegung des Sondenkopfs widerspiegelt, kann dann der Abstand zwischen dem Lichtaustritt der Sonde und dem Messobjekt bestimmt werden. Der Aktuator, der für die Sondenbewegung notwendig ist, beispielsweise der genannte Piezo-Biegearm, verkompliziert jedoch den Aufbau der faseroptischen Sonde und erhöht auch ihren Platzbedarf. Zudem ist die Messdatenrate durch die Massenträgheit des schwingenden Sensorkopfs auf wenige Kilohertz begrenzt.

Es ist eine Aufgabe der vorliegenden Erfindung, ein Verfahren und eine Anordnung der eingangs genannten Art zu schaffen, bei denen eine faseroptische Sonde zur Abstandsmessung eingesetzt werden kann, ohne dass eine periodische Schwingungsbewegung der faseroptischen Sonde zur Phasenmodulation der gemessenen Interferenzsignale notwendig ist.

Diese Aufgabe wird gelöst durch ein Verfahren und eine Anordnung mit den Merkmalen des jeweiligen unabhängigen Anspruchs. Vorteilhafte Ausgestaltungen und Weiterbildungen sind jeweils Gegenstand der abhängigen Ansprüche.

Erfindungsgemäß wird die Halbleiterlichtquelle mit einem periodisch variierenden Strom betrieben, wodurch eine Wellenlänge des von der Halbleiterlichtquelle ausgesendeten Lichts ebenfalls periodisch variiert, wobei eine Phasenlage des gemessenen Interferenzsignals in Bezug auf den periodisch variierenden Strom zur Abstandsbestimmung verwendet wird.

Gemäß dem Stand der Technik ermöglicht eine periodische Bewegung des Sondenkopfs die Messung eines Interferenzsignals, dessen Phasenlage relativ zu einem Signal, das die Bewegung des Sondenkopfs widerspiegelt, ein Maß für den Abstand ist. Bei dem erfindungsgemäßen Verfahren wird über Modulation des Betriebsstroms die Wellenlänge der Halbleiterlichtquelle variiert, wodurch sich ein Interferenzsignal ergibt, dessen Phasenlage relativ zu dem Modulationssignal des Betriebsstroms ein Maß für den Abstand ist. Das Interferenzsignal kann beispielsweise mit mindestens einem Fotosensor gemessen werden. Der Abstand kann so ohne eine Bewegung des Sondenkopfes mit hoher Auflösung und großer Wiederholfrequenz gemessen werden. Beispielsweise kann das Licht der mindestens einen Halbleiterlichtquelle mit einer Frequenz von mindestens 1 kHz (Kilohertz) und bevorzugt von mindestens 100 kHz periodisch variiert werden, was Abstandsmessungen mit einer ebenso hohen Wiederholfrequenz ermöglicht. Ohne den sonst benötigten Bewegungsaktuator kann der faseroptische Sensor besonders klein gebaut werden und ist sehr robust.

In einer vorteilhaften Ausgestaltung des Verfahrens kann als Referenzfläche der Lichtaustritt der faseroptischen Sonde selbst dienen, was einen besonders kleinen Aufbau der Sonde ermöglicht.

In einer weiteren vorteilhaften Ausgestaltung des Verfahrens wird gleichzeitig Licht unterschiedlicher Wellenlängen von mindestens zwei verschiedenen Halbleiterlichtquellen eingespeist. Bevorzugt wird dabei das Licht der mindestens zweier Halbleiterlichtquellen periodisch variiert und die entstehenden Phasenverschiebungen der beiden Lichtwellenlängen genutzt, um einen absoluten Abstandsmesswert zu bestimmen.

In einer weiteren vorteilhaften Ausgestaltung des Verfahrens wird eine Frequenzänderung des Interferenzsignals genutzt, um einen absoluten Abstandsmesswert zumindest abzuschätzen. Dieses kann vorteilhaft auch mit Licht nur einer nominellen Wellenlänge erfolgen.

Eine erfindungsgemäße Anordnung zeichnet sich dadurch aus, dass die Stromversorgungseinrichtung dazu eingerichtet ist, die Halbleiterlichtquelle mit einem periodisch variierenden Strom zu betreiben, um eine Wellenlänge des von der Halbleiterlichtquelle ausgesendeten Lichts ebenfalls periodisch zu variieren. Es ergeben sich die im Zusammenhang mit dem Verfahren genannten Vorteile.

In einer vorteilhaften Ausgestaltung der Anordnung ist die mindestens eine Halbleiterlichtquelle eine Laserdiode, insbesondere eine DFB (Distributed Feedback) -Laserdiode. Alternativ kann auch eine Superlumineszenzdiode als Halbleiterlichtquelle eingesetzt werden. Die genannten Bauelemente sind kostengünstig zu beziehen, sind wartungsarm und weisen eine lange Lebensdauer auf.

In einer vorteilhaften Ausgestaltung weist die Anordnung mindestens einen Fotosensor zur Messung des Interferenzsignals auf. Bevorzugt ist dem mindestens einen Fotosensor ein Kompensator zur Kompensation von Weglängenunterschieden vorgeschaltet. Durch den Kompensator wird ein Abgleich zwischen dem Mess- und dem Referenzstrahl hergestellt, wodurch eine Interferenz zwischen dem am Messobjekt reflektierten Licht und dem an der Referenzfläche reflektierten Licht erzielt wird, auch wenn der Weglängenunterschied größer ist als eine Kohärenzlänge des verwendeten Lichts. Der Kompensator kann dabei als ein Michelson-Interferometer oder ein faseroptisches Interferometer ausgebildet sein.

Die Erfindung wird nachfolgend anhand von Ausführungsbeispielen mithilfe von Figuren näher erläutert. Die Figuren zeigen:

Fig. 1 ein erstes Ausführungsbeispiel einer Anordnung zur faseroptischen Abstandsmessung in einer schematischen Darstellung;

Fig. 2-5 jeweils ein weiteres Ausführungsbeispiel einer Anordnung zur faseroptischen Abstandsmessung in einer schematischen Darstellung;

Fig. 6 verschiedene Ausgestaltungen eines Sondenkopfes einer faseroptischen Sonde; und

Fig. 7 weitere Ausgestaltungen eines Sondenkopfes einer faseroptischen Sonde.

In allen Figuren kennzeichnen gleiche Bezugszeichen gleiche oder gleich wirkende Elemente. Aus Gründen der Übersichtlichkeit ist nicht in jeder Figur jedes Element mit einem Bezugszeichen versehen.

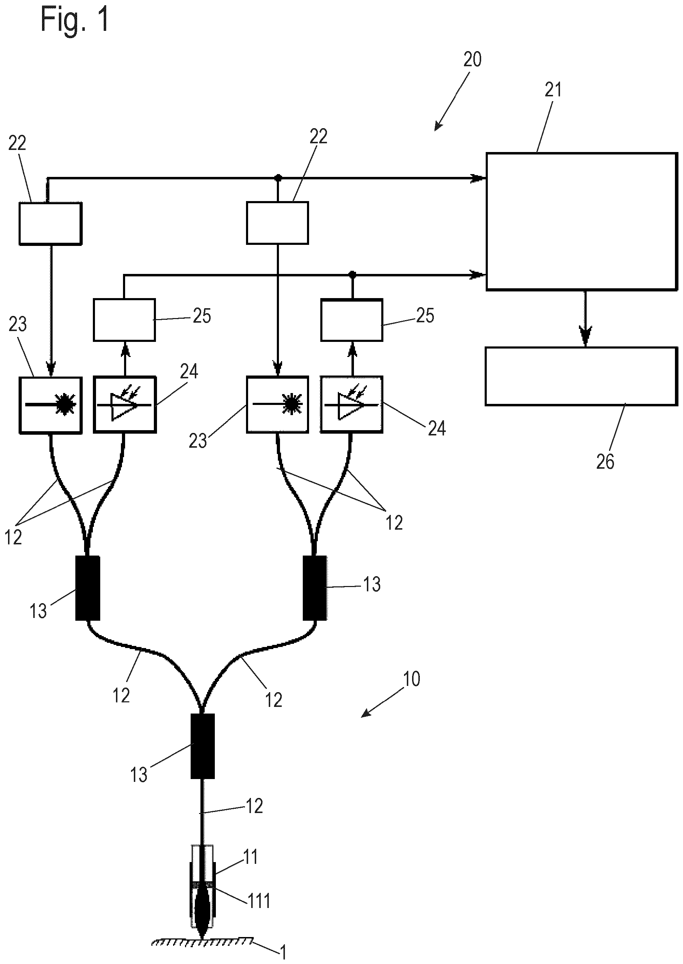

Figur 1 zeigt ein erstes Ausführungsbeispiel einer erfindungsgemäßen Anordnung zur interferometrischen Abstandsbestimmung in einer schematischen Darstellung.

Die Anordnung dient der Messung eines Abstands zwischen einem Sondenkopf 11 einer faseroptischen Sonde 10, der oberhalb einer Oberfläche eines Messobjekts 1 positioniert ist, und einem Punkt der Oberfläche des Messobjekts 1. Die Anordnung kann beispielsweise genutzt werden, um die Topologie der Oberfläche des Messobjekts 1 zu erfassen, indem der Sondenkopf 11 mittels einer hier nicht dargestellten 1- oder 2-dimensionalen Scanvorrichtung über das Messobjekt 1 geführt wird. In der Regel wird zusätzlich eine Verstellung in Abstandsrichtung zum Messobjekt 1 vorhanden sein, um einen Grundabstand der Messung einstellen zu können.

In dem Sondenkopf 11 der faseroptischen Sonde 10 endet eine Lichtleiterfaser 12, wobei in diese Lichtleiterfaser 12 eingespeistes Licht diese an einem Lichtaustritt 111 verlässt, mittels strahlformender optischer Elemente kollimiert bzw. fokussiert wird und auf die Oberfläche des Messobjekts 1 trifft. Dort reflektiertes Licht gelangt wiederum durch den Lichtaustritt 111 zurück in die Lichtleiterfaser 12. Zudem wird an dem Lichtaustritt 111 selbst Licht in die Lichtleiterfaser 12 zurück reflektiert, das sich mit dem am Messobjekt 1 reflektierten Licht überlagert und mit ihm interferiert.

Bei dem in Figur 1 dargestellten Beispiel wird in die Lichtleiterfaser 12 Licht aus zwei Lichtquellen 23 eingespeist, die in unterschiedlichen Wellenlängenbereichen emittieren. Im oberen Teil der Figur 1 ist eine Steuerung 20 dargestellt, der auch die Lichtquellen zugeordnet sind.

Konkret werden bei dem hier gezeigten Beispiel zwei Laserdioden als Halbleiterlichtquellen 23 verwendet. Die Laserdioden arbeiten beispielsweise bei unterschiedlichen nominellen Wellenlängen von $\lambda_1$ = 1550 nm (Nanometer), $\lambda_2$ = 1490 nm. Für jede der Wellenlängen ist ein Fotosensor 24 vorhanden, der das Interferenzsignal bei der jeweiligen Wellenlänge aufzeichnet. Um eine hohe Sensitivität für die entsprechende Wellenlänge aufzuweisen, können den Fotosensoren 24 hier nicht dargestellte optische Filter vorgeordnet sein.

Um beide Laserdioden und beide Fotosensoren 24 mit dem Sondenkopf 11 und der unmittelbar am Sondenkopf 11 angeordneten Lichtleiterfaser 12 zu koppeln, sind insgesamt drei Y-Teiler 13 vorhanden, mit deren Hilfe die eine mit dem Sondenkopf 11 verbundene Lichtleiterfaser 12 zunächst in zwei und dann in vier Lichtleiterfasern 12 aufgeteilt wird. Die vier Lichtleiterfasern 12 sind dann mit den beiden Lichtquellen 23 bzw. den beiden Fotosensoren 24 gekoppelt.

Weiter ist jeder Laserdiode elektrisch ein Treiber 22 vorgeschaltet, der die jeweilige Laserdiode mit einem vorgebbaren Betriebsstrom, auch Injektionsstrom genannt, versorgt. Die Treiber 22 stellen also die Stromversorgungseinrichtung für die Laserdioden dar und werden von einer Steuereinheit 21 angesteuert, die insbesondere dazu eingerichtet ist, den Injektionsstrom für die jeweilige Laserdiode über den Treiber 22 zu kontrollieren.

Den Fotosensoren 24 ist jeweils ein Verstärker 25 nachgeschaltet, dessen analoges oder digitales Ausgangssignal von der Steuereinheit 21 eingelesen wird. Die Steuereinheit 21 ist mit einer Signalverarbeitungseinheit 26 gekoppelt, die die gemessenen Signale zeitaufgelöst verarbeitet.

Im Folgenden wird das Messverfahren zur Abstandsmessung mit der Vorrichung gemäß Figur 1 detaillierter erläutert.

In beiden Laserdioden 23 wird durch Modulation des Betriebsstroms (Injektionsstroms) mit einer Frequenz $f_0$ gesteuert durch die Steuereinheit 21 eine periodische Wellenlängenmodulation hervorgerufen, deren Amplitude in der Größenordnung $\Delta\lambda_1 \approx \Delta\lambda_2 \approx 1$ nm liegt.

Der Sondenkopf 11 ist so gestaltet, dass ein Teil des Lichtes jeder Wellenlänge intern an einer Referenzfläche reflektiert wird, z.B. dem Lichtaustritt 111. Das übrige Licht legt eine zusätzliche optische Weglänge $s_0$ bis zur Oberfläche des Messobjekts 1 zurück, wird dort reflektiert, gelangt zurück in den Sondenkopf 11 und interferiert dort mit dem an der Referenzfläche, z.B. dem Lichtaustritt 111, reflektierten Lichtanteil. Es ergeben sich die folgenden beiden Gleichungen Gl. 1 und Gl. 2 für die Interferenzintensitäten der beiden Lichtwellenlängen. Dabei wurde beim Übergang in die jeweils zweiten Gleichungsteile die im Bereich der Nulldurchgänge geltende Näherung

$$\sin\left(2\pi f_0 t\right) \approx 2\pi f_0 t$$

zugrunde gelegt:

Gleichung Gl. 1:

$$I_1\left(t\right) = I_{10} + \Delta I_1 \cos\left(\frac{4\pi s_0}{c}\left(\nu_1 + \Delta\nu_1 \sin\left(2\pi f_0 t\right)\right)\right)$$

$$\approx I_{10} + \Delta I_1 \cos\left(\frac{4\pi}{\lambda_1} s_0 + \frac{4\pi\,\Delta\lambda_1}{\lambda_1^2} s_0\, 2\pi f_0 t\right) = I_{10} + \Delta I_1 \cos\left(\frac{4\pi}{\lambda_1} s_0 + 2\pi f_1 t\right)$$

Gleichung Gl. 2:

$$I_2\left(t\right) = I_{20} + \Delta I_2 \cos\left(\frac{4\pi s_0}{c}\left(\nu_2 + \Delta\nu_2 \sin\left(2\pi f_0 t\right)\right)\right)$$

$$\approx I_{20} + \Delta I_2 \cos\left(\frac{4\pi}{\lambda_2} s_0 + \frac{4\pi\,\Delta\lambda_2}{\lambda_2^2} s_0\, 2\pi f_0 t\right) = I_{20} + \Delta I_2 \cos\left(\frac{4\pi}{\lambda_2} s_0 + 2\pi f_2 t\right)$$

$I_{10}$ bzw. $I_{20}$ sind dabei Gleichanteile der Interferenzintensität, die für die weitere Auswertung nicht relevant sind. Eine Abstandsänderung um die Strecke $\Delta s$ führt somit zu einer Phasenänderung $\Delta\varphi_1$ bzw. $\Delta\varphi_2$ der Cosinus-Funktion gemäß der Gleichung Gl. 3 und gleichzeitig zu einer Frequenzänderung $\Delta f_1$ bzw. $\Delta f_2$ der phasenmodulierten Interferenzsignale gemäß Gleichung Gl. 4:

Gleichung Gl. 3:

$$\Delta\varphi_{1,2} = \frac{4\pi}{\lambda_{1,2}} \Delta s$$

Gleichung Gl. 4:

$$\Delta f_{1,2} = \frac{4\pi\,\Delta\lambda_{1,2}}{\left(\lambda_{1,2}\right)^2}\,\Delta s\,f_0\,.$$

Damit ergibt sich eine Differenz der Phasenänderungen $\Delta\Phi$ für die beiden Wellenlängen gemäß Gleichung Gl.5:

Gleichung Gl. 5:

$$\Delta\Phi = \Delta\varphi_1 - \Delta\varphi_2 = \left(\frac{4\pi}{\lambda_1} - \frac{4\pi}{\lambda_2}\right)\Delta s = 4\pi\frac{\lambda_1 - \lambda_2}{\lambda_1\,\lambda_2}\Delta s\,.$$

Eine gesuchte Abstandsänderung $\Delta s$ kann nun vorteilhaft in drei Schritten bestimmt werden:

1. Aus der Frequenzänderung $\Delta f_1$ bzw. $\Delta f_2$ resultiert für jede der beiden Wellenlängen $\lambda_1$ bzw. $\lambda_2$ ein erster Schätzwert $\Delta s_a$ für $\Delta$s, von dem vorausgesetzt wird, dass die maximale Abweichung zum wahren Wert geringer als $\lambda_1\,\lambda_2/(2(\lambda_1 - \lambda_2))$ ist.

2. Im zweiten Schritt wird mit Hilfe der Phasendifferenz $\Delta\Phi$ und des vorangegangenen Schätzwertes $\Delta s_a$ ein genauerer Schätzwert $\Delta s_b$ für $\Delta s$ ermittelt.

3. Der Wert $\Delta s_b$ wird im dritten Schritt genutzt, um mit Hilfe von $\Delta\varphi_1$ bzw. $\Delta\varphi_2$ den endgültigen Schätzwert $\Delta s_c \approx \Delta s$ mit der höchsten Genauigkeit zu ermitteln.

Während die Frequenzmessung einen eindeutigen aber vergleichsweise groben Abstandswert liefert, erbringt die Phasenauswertung eines Interferenzsignals gemäß Schritt 3 einen präzisen Wert welcher jedoch auf einen Eindeutigkeitsbereich von $\lambda_1$ /2 bzw. $\lambda_2$ /2 begrenzt ist. Die Kombination der aus den Schritten 1 und 3 ermittelten Abstandswerte erfolgt durch Schritt 2, was eine absolute Distanzmessung mit höchster Genauigkeit ermöglicht. Liegt die Unsicherheit des Schätzwertes $\Delta s_a$ unterhalb des Eindeutigkeitsbereichs von $\pm\lambda_1/4$ bzw. $\pm\lambda_2/4$ kann auf Schritt 2 verzichtet und die in Figur 1 gezeigte Anordnung auf eine Lichtquelle 23, einen Laserdiodentreiber 22, einen Fotosensor 24 und einen Verstärker 25 reduziert werden.

Im Betrieb wird der Betriebsstrom (Injektionsstrom) der beiden Laserdioden 23 moduliert. Insbesondere wenn die Laserdioden 23 DFB (Distributed Feedback) - Laserdioden sind, ändert sich mit dem Injektionsstrom nicht nur die Lichtintensität, sondern auch die Wellenlänge des abgestrahlten Lichts. Um das Signal zur Modulation der Injektionsströme der Laserdioden 23 mit einem Abtastsignal zur Digitalisierung der verstärkten Fotosensorsignale der Fotosensoren 24 zu synchronisieren, werden beide Signale bevorzugt in der Steuereinheit 21 synchron auf der Basis eines gemeinsamen Taktsignals erzeugt. Eine Auswertung der Signale erfolgt in der nachgelagerten Signalverarbeitungseinheit 26.

Bei konstantem Abstand des Sondenkopfes 11 zur Oberfläche des Messobjekts 1 durchläuft die Intensität der durch die Fotosensoren 24 gemessenen Signale aufgrund der Modulation Interferenzminima und -maxima. Mit einer Abstandsänderung ändert sich die Phasenlage der Interferenzminima und -maxima gegenüber dem periodischen Modulationssignal des Betriebsstroms der Laserdioden 23. Dabei können insbesondere Bereiche zwischen zwei Maxima des Modulationssignals, in denen die Frequenz des Interferenzsignals jeweils maximal ist, zur Bestimmung der Phasenlagen analysiert werden, bevor, wie oben beschrieben, die Phasenwerte in Abstandsänderungen umgerechnet werden. Die für den ersten Schritt erforderliche Frequenzschätzung erfolgt mit Hilfe eines FFT (Fast Fourier Transform)- oder DFT (Discrete Fourier Transform)-Algorithmus.

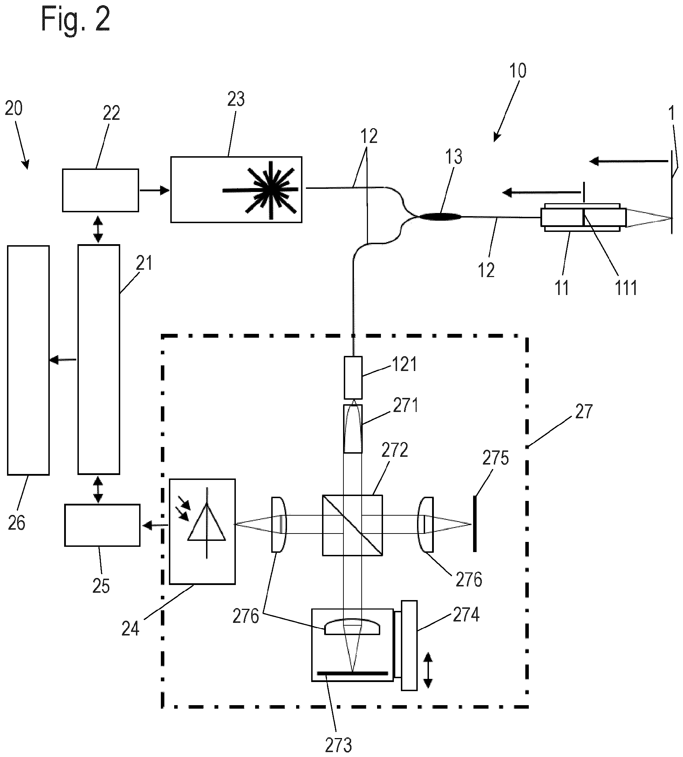

In den Figuren 2-5 ist jeweils ein weiteres Ausführungsbeispiel einer Anordnung zur interferometrischen Abstandsbestimmung auf Basis einer Superlumineszenzdiode (SLD) anstelle einer Laserdiode als Lichtquelle 23 schematisch gezeigt. Diese Anordnungen stellen eine Alternative zu dem Figur 1 angeführten Ausführungsbeispiel dar. Es sei noch erwähnt, dass auch in den Figuren 2-5 eine Laserdiode verwendet werden könnte, dies könnte jedoch zu Störreflexionen führen, welche die Messunsicherheit beeinträchtigen könnten.

Allen Ausführungsbeispielen ist gemein, dass sie eine faseroptische Sonde 10 und eine Steuerung 20 aufweisen, die in ihrem Grundaufbau dem des ersten Ausführungsbeispiels aus Figur 1 entsprechen. Auf die Beschreibung zu diesem ersten Ausführungsbeispiel, einschließlich den Erläuterungen zur Signalauswertung, wird daher auch im Zusammenhang mit den Beispielen der Figuren 2-5 explizit verwiesen. Im Folgenden werden insbesondere die Unterschiede der Ausführungsbeispiele der Figuren 2-5 gegenüber dem Ausführungsbeispiel der Figur 1 und untereinander erläutert.

Bei dem Ausführungsbeispiel der Figur 2 wird Licht nur einer SLD in entsprechend nur einem Wellenlängenbereich zur interferometrischen Abstandsbestimmung genutzt. Folglich ist auch nur ein Treiber 22 für die eine Laserdiode 23 und ein Fotosensor 24 mit einem Verstärker 25 vorhanden. Der Aufbau der faseroptischen Sonde 10 vereinfacht sich insofern, als dass nur ein Y-Teiler 13 verwendet wird, um die vom Sondenkopf 11 ausgehende Lichtleiterfaser in zwei Lichtleiterfasern 12 zu teilen, die mit der SLD bzw. dem Fotosensor 24 gekoppelt sind.

Die dargestellte Anordnung ermöglicht ebenso eine Absolutmessung des Abstands gemäß der Schritte 1 und 3, sofern die maximale Abweichung des Schätzwertes $\Delta s_a$ kleiner als $\pm \lambda_1/4$ ist und daher auf Schritt 2 sowie die Nutzung einer zweiten SLD verzichtet werden kann.

Ein weiterer Unterschied zum Ausführungsbeispiel der Figur 1 liegt in der Verwendung eines Kompensator 27, der dem Fotosensor 24 vorgeordnet ist. Dies ist Aufgrund der geringen Kohärenzlänge der SLD notwendig, um einen Abgleich zwischen Mess- und Referenzstrahl herzustellen. Um eine Interferenz in der Lichtleiterfaser 12 zwischen dem am Messobjekt 1 reflektierten Licht und dem am Lichtaustritt 111 reflektierten Licht zu erzielen, darf der Weglängenunterschied nicht größer als die Kohärenzlänge der verwendeten Lichtquelle 23, also z.B. der Laser- bzw. Superlumineszenzdiode sein. Bei typischen Kohärenzlängen von kommerziell erhältlichen SLD im Bereich von typischerweise einigen Mikrometern wird ein entsprechend kleiner Abstand zwischen Messobjekt 1 und dem Lichtaustritt 111 erforderlich. Dieses kann aus technischen Gründen häufig nicht umgesetzt werden. Der Kompensator 27 ist seinerseits in Art eines Michelson-Interferometers aufgebaut und überlagert die zugeführten Wellenzüge mit einem Duplikat ihrer selbst, das um einen einstellbaren Gangunterschied verschoben ist.

Im Kompensator 27 endet die das Licht zuführende Lichtleiterfaser 12 in einem Faserverbinder 121 und wird dort von einem Kollimator 271 zu einem parallelen Strahlenbündel geformt, das auf einen Strahlteiler 272 geführt wird. Es wird in zwei Strahlenbündel aufgeteilt, die in der Figur 2 nach rechts bzw. nach unten aus dem Strahlteiler 272 austreten. Das nach unten austretende Strahlenbündel trifft auf einen bewegbaren Spiegel 273, der mit einem Antrieb 274 verbunden ist, um seinen Abstand zum Strahlteiler 272 verstellen zu können. Das nach rechts aus dem Strahlteiler 272 austretende Strahlenbündel trifft dagegen auf einen festen Spiegel 275, dessen Abstand zum Strahlteiler 272 feststeht.

Beide von den Spiegeln 273, 275 reflektierten Strahlenbündel werden in dem Strahlteiler 272 wieder überlagert und dann auf den Fotosensor 24 geführt. Zur robusten Überlagerung der Strahlenbündel auf dem Fotosensor 24 sind in den verschiedenen Strahlengängen vor den Spiegeln 273 und 275 und vor dem Fotosensor 24 Linsen 276 angeordnet.

Im Betrieb wird der Gangunterschied der beiden erzeugten Strahlenbündel in Kompensator 27 so eingestellt, dass er in etwa dem Wegunterscheid der am Lichtaustritt 111 bzw. am Messobjekt 1 reflektierten Strahlen entspricht. Als Folge interferieren die beiden Strahlen miteinander, auch wenn die Kohärenzlänge kleiner ist als der Wegunterschied.

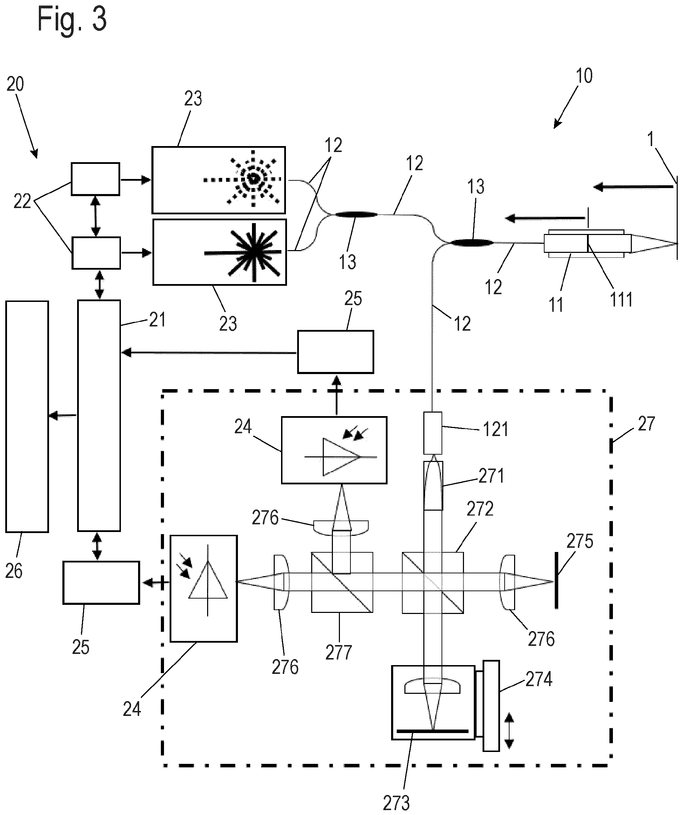

Bei den Ausführungsbeispielen der Figuren 3-5 werden anders als im Beispiel der Figur 2 und daher vergleichbar wie beim Ausführungsbeispiel der Figur 1 wieder zwei Lichtquellen 23 mit entsprechend zwei Treibern 22, zwei Fotosensoren 24 und zwei Verstärken 25 verwendet, sodass - wieder wie beim Beispiel der Figur 1 - eine absolute Abstandsmessung mit Licht in 2 unterschiedlichen Wellenlängenbereichen gemäß der Schritte 1-3 durchgeführt wird. Im Gegensatz zu Figur 1 handelt es sich bei den Lichtquellen 23 um SLD.

Wie beim Ausführungsbeispiel der Figur 2 ist bei dem Beispiel der Figur 3 ein Kompensator 27 angeordnet, dessen Funktionsprinzip wie das des Kompensators 27 aus Figur 2 ist, lediglich ergänzt um einen weiteren Strahlteiler 277, der das aus dem Strahlteiler 272 austretende Licht auf beide Fotosensoren 24 aufgeteilt.

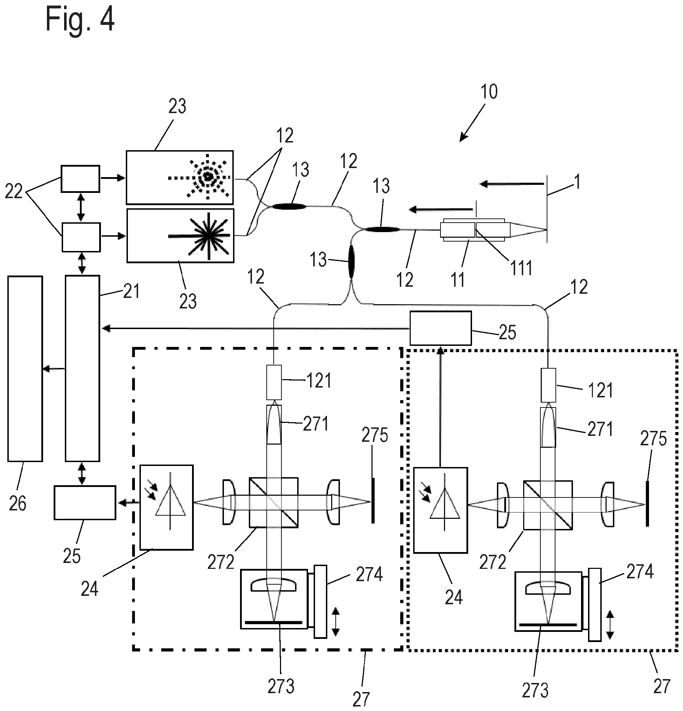

Das Ausführungsbeispiel der Figur 4 zeigt eine Weiterbildung des Beispiels der Figur 3, bei dem zwei getrennte Kompensatoren 27 jeweils einem der Fotosensoren 24 zu geordnet sind. Die Kompensatoren 27 benötigen entsprechend keinen weiteren Strahlteiler, stattdessen erfolgt eine Aufteilung durch einen Y-Teiler 13 in der Zuführung der Lichtleiterfaser 12 zu dem jeweiligen Kompensator 27.

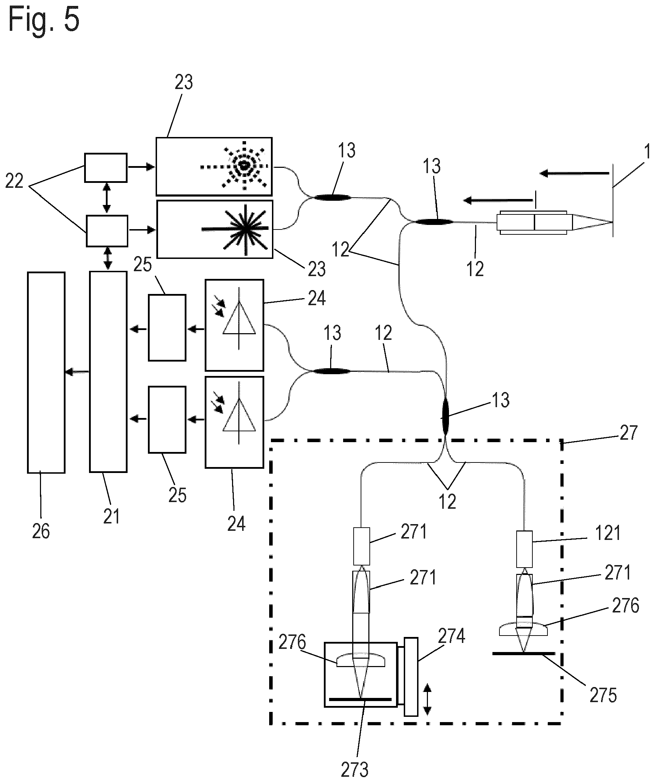

Das Ausführungsbeispiel der Figur 5 zeigt ebenfalls eine Anordnung, die zwei SLD, entsprechend zwei Treiber 22 und zwei Fotosensoren 24 und entsprechend zwei Verstärker 25 eingesetzt, wobei wiederum ein gemeinsamer Kompensator 27 vorhanden ist. Anders als die in den Figuren 2-4 gezeigten Kompensatoren 27, die als Michelson-Interferometer ausgebildet sind, wird hier eine Kompensation faseroptisch durchgeführt, indem Licht zunächst mit einem weiteren Y-Teiler 13 über zwei Lichtleiterfasern 12 in den Kompensator 27 eingebracht wird. Das Licht wird über Faserverbinder 121 und Kollimatoren 271 zu zwei Strahlenbündeln geformt. Diese werden über Linsen 276 wiederum auf einen bewegbaren Spiegel 273 bzw. einen festen Spiel 275 geführt und von dort zurück in die Fasern 12 gekoppelt. Es werden auf diese Weise Wellenzüge in den Licht zuführenden Lichtleiterfasern 12 zeitlich gegeneinander verschoben und somit zur Interferenz gebracht, auch wenn das Licht nur eine Kohärenzlänge aufweist, die unterhalb des ursprünglichen Weglängenunterschieds liegt.

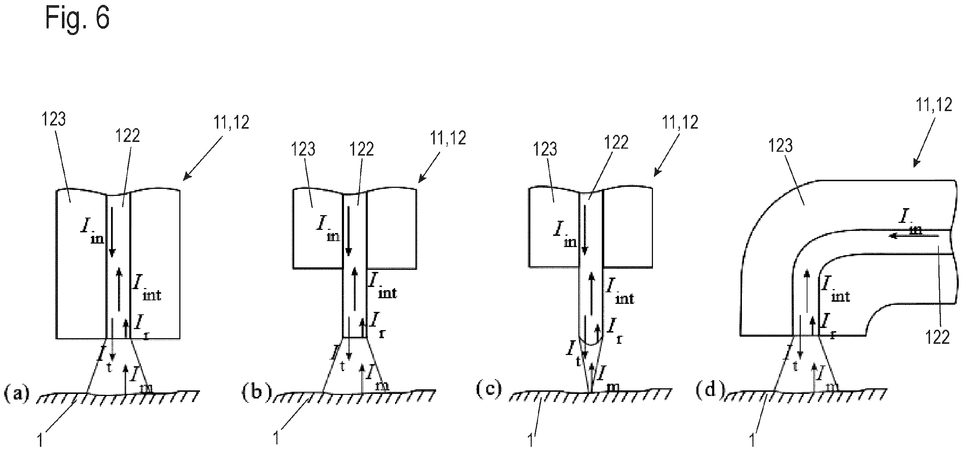

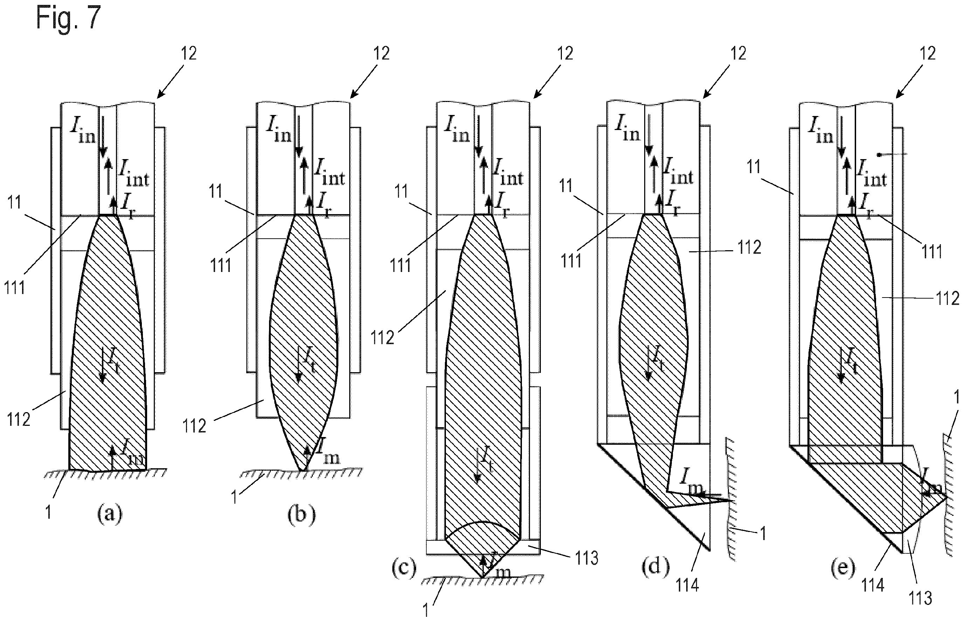

In den Figuren 6 und 7 sind verschiedene Ausgestaltungen eines Sondenkopfes 11 gezeigt, der in Verbindung mit den Anordnungen der Figuren 1-5 eingesetzt werden kann.

Figur 6 zeigt vier Ausführungsbeispiele eines Sondenkopfes 11, die besonders klein und platzsparend aufgebaut sind und letztlich nur aus dem Ende entsprechend präparierter Lichtleiterfasern 12 bestehen.

Bei der Variante des Teilbilds (a) ist die Lichtleiterfaser 12, die einen das Licht leitenden Faserkern 122 und einen diesen umgebenden Fasermantel 123 aufweist, am Ende plan geschnitten bzw. geschliffen.

Bei der Variante des Teilbilds (b) ragt der Faserkern 122 an seinem Ende über den Fasermantel 123 hinaus, was eine im Endbereich noch schmalere Ausführung des Sondenkopf 11 ermöglicht.

Bei der Variante des Teilbilds (c) ist zusätzlich das Ende des Faserkerns 122 konvex geschliffen, wodurch Licht aus dem Sondenkopf 11 nicht in Form eines Kegels wie bei den Teilbildern (a) und (b) austritt, sondern auf einen kleineren Spot der Oberfläche des Messobjekts 1 fokussiert wird. So lässt sich eine höhere laterale Auflösung der Abstandsmessung erreichen.

Bei der Variante (d) ist die Lichtleiterfaser 12 ähnlich wie bei der Variante (a) plan geschnitten, knickt jedoch unmittelbar vor dem Lichtaustritt 111 ab, sodass auch in einem Spalt o. ä. gemessen werden kann.

In Figur 7 zeigt fünf verschiedene Varianten eines Sondenkopfes 11, bei denen neben der das Licht zuführenden Lichtleiterfaser 12 strahlformende Elemente im Sondenkopf 11 angeordnet sind.

Bei den Beispielen der Varianten (a) und (b) werden als strahlformende Elemente Zylinderelemente 112 eingesetzt, insbesondere sogenannte GRIN (Gradient Index)-Linsen. Bei der Variante (a) trifft das Licht möglichst senkrecht auf die Oberfläche des Messobjekts 1, wodurch ein großer Messbereich für Distanzmessungen entsteht, die laterale Auflösung und die Erfassung zur optischen Achse geneigte Oberflächen jedoch stark eingeschränkt sind. Bei der Variante (b) wird dagegen eine Fokussierung auf ein kleinen Spot auf der Oberfläche des Messobjekts 1 erzielt, was wiederum ähnlich wie beim Beispiel der Figur 6, Variante (c) zu einer höheren lateralen Auflösung bei einem Oberflächenscan führt.

Bei den Varianten (c) und (e) werden zur Strahlfokussierung jeweils ein Zylinderelement 112 und eine Vorsatzlinse 113 verwendet. Die Varianten (d) und (e) nutzen zudem ein Prisma 114, um Licht zur Seite aus dem Sondenkopf 11 auszukoppeln und - ähnlich wie beim Beispiel der Figur 6, Variante (d) - eine Messung in einem Spalt o. ä. zu ermöglichen.

An dieser Stelle sei angemerkt, dass keine Ansprüche auf die in den Figuren 6 und 7 aufgeführten Sondenköpfe im Einzelnen besteht. Diese sollen lediglich die Möglichkeit der Miniaturisierung und den im Vergleich zu anderen interferometrischen Sensoren vereinfachten Konstruktionsaufwand demonstrieren, insbesondere in Kombination mit der in Figur 1 dargestellten Sensorkonfiguration.

**Bezugszeichen**

| | |
|---|---|
| 1 | Messobjekt |
| | |
| 10 | faseroptische Sonde |
| 11 | Sondenkopf |
| 111 | Lichtaustritt |
| 112 | Zylinderelement |
| 113 | Vorsatzlinse |
| 114 | Prisma |
| 12 | Lichtleiterfaser |
| 121 | Faserverbinder |
| 122 | Faserkern |
| 123 | Fasermantel |
| 13 | Y-Teiler |
| | |
| 20 | Steuerung |
| 21 | Steuereinheit |
| 22 | Treiber |
| 23 | Halbleiterlichtquelle |
| 24 | Fotosensor |
| 25 | Verstärker |
| 26 | Signalverarbeitungseinheit |
| 27 | Kompensator |
| 271 | Kollimator |
| 272 | Strahlteiler |
| 273 | bewegter Spiegel |
| 274 | Antrieb |
| 275 | fester Spiegel |
| 276 | Linse |

277     weiterer Strahlteiler

**Patentansprüche**

1. Verfahren zur interferometrischen Abstandsbestimmung mittels einer faseroptischen Sonde (10), bei dem Licht mindestens einer Halbleiterlichtquelle (23) in die faseroptische Sonde (10) eingespeist wird, wobei ein von einem Lichtaustritt (111) der Sonde (10) auf ein Messobjekt (1) gesendeter und von dem Messobjekt (1) reflektierter Teil des Lichts zu einer Interferenz gebracht wird mit einem Teil des Lichts, der von einer Referenzfläche reflektiert wird, wobei ein Interferenzsignal gemessen wird und zur Abstandsbestimmung verwendet wird, **dadurch gekennzeichnet, dass** die Halbleiterlichtquelle (23) mit einem periodisch variierenden Strom betrieben wird, wodurch eine Wellenlänge des von der Halbleiterlichtquelle (23) ausgesendeten Lichts ebenfalls periodisch variiert, wobei eine Phasenlage des gemessenen Interferenzsignals in Bezug auf den periodisch variierenden Strom zur Abstandsbestimmung verwendet wird.

2. Verfahren nach Anspruch 1, bei dem der Lichtaustritt (111) der Sonde (10) selbst die Referenzfläche bildet.

3. Verfahren nach Anspruch 1 oder 2, bei dem die gleichzeitig Licht unterschiedlicher Wellenlängen von zwei verschiedenen Halbleiterlichtquellen (23) eingespeist wird.

4. Verfahren nach einem der Ansprüche 1 bis 3, bei dem die Wellenlänge des Lichts der mindestens einen Halbleiterlichtquelle (23) periodisch um etwa 1 nm variiert.

5. Verfahren nach einem der Ansprüche 1 bis 4, bei dem das Licht der mindestens einen Halbleiterlichtquelle (23) mit einer Frequenz von mindestens 1 kHz und bevorzugt von mindestens 100 kHz periodisch variiert.

6. Verfahren nach einem der Ansprüche 1 bis 5, bei dem das Interferenzsignal mit mindestens einem Fotosensor (24) gemessen wird.

7. Verfahren nach einem der Ansprüche 1 bis 6, bei dem eine Frequenzänderung des Interferenzsignals genutzt wird, um einen absoluten Abstandsmesswert abzuschätzen.

8. Verfahren nach einem der Ansprüche 2 bis 7, bei dem Licht mindestens zweier Halbleiterlichtquellen (23) periodisch variiert und die entstehenden Phasenverschiebungen der beiden Lichtwellenlängen genutzt wird, um einen absoluten Abstandsmesswert zu bestimmen.

9. Anordnung zur interferometrischen Abstandsbestimmung, umfassend mindestens eine Halbleiterlichtquelle (23) mit einer Stromversorgungseinrichtung zum Betreiben der Halbleiterlichtquelle (23), und eine mit der mindestens eine Halbleiterlichtquelle (23) gekoppelte faseroptische Sonde (10), wobei von dem Messobjekt (1) reflektiertes Licht mit Licht der Halbleiterlichtquelle, das von einer Referenzfläche reflektiert wird, zu einer Interferenz gebracht wird, und ein Interferenzsignal gemessen wird, **dadurch gekennzeichnet, dass**
die Stromversorgungseinrichtung dazu eingerichtet ist, die Halbleiterlichtquelle (23) mit einem periodisch variierenden Strom zu betreiben, um eine Wellenlänge des von der Halbleiterlichtquelle (23) ausgesendeten Lichts ebenfalls periodisch zu variieren.

10. Anordnung nach Anspruch 9, bei der die mindestens eine Halbleiterlichtquelle (23) eine Laserdiode ist.

11. Anordnung nach Anspruch 10, bei der die Laserdiode (23) eine DFB-Laserdiode ist.

12. Anordnung nach Anspruch 9, bei der die mindestens eine Halbleiterlichtquelle (23) eine Superlumineszenzdiode ist.

13. Anordnung nach einem der Ansprüche 9 bis 12, aufweisend mindestens einem Fotosensor (24) zur Messung des Interferenzsignals.

14. Anordnung nach Anspruch 13, bei der dem mindestens einen Fotosensor (24) ein Kompensator (27) zur Kompensation von Weglängenunterschieden vorgeschaltet ist.

15. Anordnung nach Anspruch 14, bei der der Kompensator (27) als ein Michelson-Interferometer oder ein faseroptisches Interferometer ausgebildet ist.

# Fig. 1

# Fig. 2

Fig. 3

Fig. 4

Fig. 5

Fig. 6

Fig. 7

Europäisches
Patentamt

European
Patent Office

Office européen
des brevets

**EUROPÄISCHER RECHERCHENBERICHT**

Nummer der Anmeldung

EP 24 19 2313

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 806 246 A1 (ATTOCUBE SYSTEMS AG [DE]) 26. November 2014 (2014-11-26) | 1-13 | INV. G01B9/02001 |
| Y | * Zusammenfassung * <br> * Absätze [0020] - [0032]; Abbildungen 1-7 * <br> * Absätze [0070] - [0091] * <br> ----- | 1-15 | G01B9/02004 <br> G01B9/02055 <br> G01B9/02056 <br> G01B9/0209 <br> G01S17/34 |
| X | DE 40 35 373 A1 (FIBRONIX SENSOREN GMBH [DE]) 14. Mai 1992 (1992-05-14) | 1-13 | G01S17/36 |
| Y | * das ganze Dokument * <br> ----- | 1-15 | |
| X | EP 0 260 894 A1 (COGENT LTD [GB]) 23. März 1988 (1988-03-23) | 1-13 | |
| Y | * Seiten 5-6; Abbildungen 1-5 * <br> ----- | 1-15 | |
| X | DE 10 2010 041634 A1 (ZEISS CARL AG [DE]) 29. März 2012 (2012-03-29) | 1-13 | |
| Y | * Zusammenfassung; Abbildungen 1-6 * <br> * Absätze [0041], [0050] - [0051] * <br> ----- | 1-15 | |
| X | US 2014/139846 A1 (JENSEN THOMAS [CH]) 22. Mai 2014 (2014-05-22) | 9-15 | RECHERCHIERTE SACHGEBIETE (IPC) |
| Y | * Zusammenfassung * <br> * Absätze [0013], [0046]; Anspruch 26; Abbildungen 10-11 * <br> ----- | 1-15 | G01B <br> G01S |

Der vorliegende Recherchenbericht wurde für alle Patentansprüche erstellt

| Recherchenort | Abschlußdatum der Recherche | Prüfer |
|---|---|---|
| München | 10. Januar 2025 | Burkart, Johannes |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 2313

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-01-2025

| Im Recherchenbericht angeführtes Patentdokument | Datum der Veröffentlichung | Mitglied(er) der Patentfamilie | Datum der Veröffentlichung |
|---|---|---|---|
| EP 2806246 A1 | 26-11-2014 | DE 202014101699 U1 | 17-07-2014 |
| | | EP 2806246 A1 | 26-11-2014 |
| | | JP 6199801 B2 | 20-09-2017 |
| | | JP 2014228545 A | 08-12-2014 |
| | | US 2015019160 A1 | 15-01-2015 |
| DE 4035373 A1 | 14-05-1992 | KEINE | |
| EP 0260894 A1 | 23-03-1988 | EP 0260894 A1 | 23-03-1988 |
| | | GB 2200986 A | 17-08-1988 |
| | | US 4974961 A | 04-12-1990 |
| DE 102010041634 A1 | 29-03-2012 | DE 102010041634 A1 | 29-03-2012 |
| | | WO 2012041586 A1 | 05-04-2012 |
| US 2014139846 A1 | 22-05-2014 | BR 112013032920 A2 | 24-01-2017 |
| | | CN 103635775 A | 12-03-2014 |
| | | EP 2541193 A1 | 02-01-2013 |
| | | EP 2724116 A1 | 30-04-2014 |
| | | KR 20140010458 A | 24-01-2014 |
| | | US 2014139846 A1 | 22-05-2014 |
| | | WO 2013000866 A1 | 03-01-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102011001161 A1